Europäisches Patentamt

(19) European Patent Office　(11) Numéro de publication: **0 014 164**

Office européen des brevets　　　　　　　　　　**B1**

⑫　**FASCICULE DE BREVET EUROPEEN**

(45) Date de publication du fascicule du brevet: **27.10.82**　(51) Int. Cl.³: **G 01 N 11/10**

(21) Numéro de dépôt: **80420002.0**

(22) Date de dépôt: **09.01.80**

(54) Viscosimètre et viscosistat.

(30) Priorité: **12.01.79 FR 7901184**

(43) Date de publication de la demande:
**06.08.80 Bulletin 80/16**

(45) Mention de la délivrance du brevet:
**27.10.82 Bulletin 82/43**

(84) Etats contractants désignés:
**AT CH DE GB IT SE**

(56) Documents cités:
**FR - A - 1 064 558**
**GB - A - 842 710**
**US - A - 3 304 765**

**JOURNAL OF PHYSICS E: SCIENTIFIC INSTRUMENTS, vol. 9, no. 5, 1976 Londres, GB R.J. McLACHLAN "A new high pressure viscometer for viscosity range 10 to 10 6 Pa s", pages 391—394.**

(73) Titulaire: **Centre Technique Industriel dit "CENTRE TECHNIQUE DES INDUSTRIES AERAULIQUES ET THERMIQUES"**
**Plateau du Moulin**
**F-92402 Orsay (FR)**

(72) Inventeur: **Dietz, Roland**
**Domaine des Varennes Parcieux**
**F-01600 Trevoux (FR)**

(74) Mandataire: **Laurent, Michel et al,**
**Bureaux Chalin A1 20, rue Louis Chirpaz Boîte Postale 32**
**F-69130 Lyon-Ecully (FR)**

Courier Press, Leamington Spa, England.

## Viscosimètre et viscositat

L'invention concerne un nouveau type de viscosimètre; elle se rapporte également à un viscosistat réalisé avec un tel viscosimètre.

Comme on le sait, un "viscosimètre" est un appareil destiné à mesurer la viscosité des fluides. En revanche, un "viscosistat", dénommé parfois aussi "viscostat", est un appareil constitué par un viscosimètre, par des moyens de détection de l'information donnée par le viscosimètre et par des moyens de régulation connectés aux moyens de détection.

L'invention est particulièrement adaptée, mais non limitée, aux appareils de régulation de la viscosité ou viscosistats, des fuels-oils lourds, utilisés notamment dans les appareils de chauffage, de production de chaleur ou d'électricité.

A ce jour, il existe de nombreux types de viscosimètres. Schématiquement, on peut les classer de la manière suivante, étant rappelé que ces appareils sont généralement établis pour fonctionner en régime laminaire:

a) appareils à chutes de billes ou de barreau,
b) appareils à capillaire,
c) appareils à cylindres coaxiaux,
d) appareils à mesure empirique,
e) appareils à pression différentielle,
f) appareils à mesure de couple,
g) appareils à vibrations.

Selon le cas, ces appareils présentent plusieurs des principaux défauts suivants:

— nécessité d'être calibrés, puis soigneusement étalonnés,
— impossibilité de fonctionner en marche continu,
— coût de construction élevé,
— nécessité de faire appel à un fluide au repos,
— difficulté à être automatisés,
— signal assez faible,
— manque de sensibilité.

Comme on le sait, la combustion des combustibles liquides nécessite préalablement de les pulvériser. Or, la viscosité du fuel-oil est un des paramètres prépondérant de cette pulvérisation et donc de la qualité de combustion. Longtemps, on a proposé de réguler la température du fuel à pulvériser. Maintenant, pour différentes raisons, on estime qu'il est préférable de réguler la viscosité du combustible, notamment pour obtenir une réponse plus rapide. Pour ce faire, on fait appel à un viscositat.

Comme déjà dit, un viscosistat se compose essentiellement d'un viscosimètre, d'un organe de mesure de la viscosité qui transmet une information à un régulateur qui à son tour compare cette information à une consigne préétablie, puis agit en plus ou en moins sur un dispositif de puissance, lequel enfin agit sur la viscosité du fluide, qui elle-même influera sur l'organe de mesure.

En pratique, il existe plusieurs types industriels de viscosistats:

a) celui dénommé BP-Viscostat, qui fonctionne sur le principe du viscosimètre à chutes de billes et présente l'inconvénient de fonctionner en discontinu-continu;

b) celui dénommé OTIC-FISCHER et PORTER (voir notamment brevet britannique 842 710), dans lequel la bille est remplacée par un mobile dont le poids est équilibré par la poussée du liquide et qui s'écoule avec régulation interne du débit du fluide autour du mobile; cet appareil nécessite d'être étanche et présente l'inconvénient d'être sensible aux variations de débit et malheureusement celui de n'être pas assez sensible aux variations de viscosité;

c) ceux à mesure de couple, par exemple du type dénommé EUROCONTROL ou BAILEY-CONTRAVES qui ne donne pas toujours des résultats cohérents.

En outre, tous ces appareils ont en commun un coût élevé de fabrication ou de fonctionnement et ont un prix même souvent supérieur à celui du brûleur auquel ils sont destinés à être associés. De la sorte, jusqu'à ce jour, les viscosistats ont été relativement peu utilisés industriellement.

Dans le brevet américain 3,304,765 de NORCROSS, on a décrit un viscosimètre à chute de barreau présentant un organe de détection de fin de course de ce barreau et éventuellement un ressort destiné à accélérer la chute dudit barreau dans des liquides fortement visqueux. Ce viscosimètre, difficile à automatiser puisque l'on mesure un temps, s'apparente à celui dénommé BP analysé ci-dessus en a et présente donc les mêmes inconvénients. En outre, il nécessite un étalonage préalable et de faire appel à un fluide sensiblement au repos.

Dans "Journal of Physics E : Scientific Instruments" volume 9 n°5, 1976, p. 391—394, on a décrit également un viscosimètre manuel à chute de barreau, équipé d'un détecteur de proximité destiné à mesurer le temps de chute dudit barreau, constitué par une bobine inductrice et une bobine induite entourant l'enceinte du viscosimètre. Ce dispositif présente les mêmes inconvénients que ci-dessus et en outre, il est totalement discontinu, de sorte que si l'on désire mesurer un autre liquide, il faut alors vidanger l'appareil.

L'invention vise essentiellement un viscosimètre, puis un viscostat, d'un coût relativement bon marché, peu sensible à la température et aux vibrations, résistant bien aux pressions usuelles appliquées lors de la combustion des fuels-oils lourds, par exemple de l'ordre de 20 bars, et réduisant au minimum les problèmes d'étanchéité.

Ce viscosimètre du type comportant

— une enceinte étanche en un matériau amagnétique présentant un organe d'amenée et un organe de sortie, pour un fluide liquide,
— un mobile, en un matériau magnétique, apte à se déplacer dans ladite enceinte,
— un organe de détection électromagnétique de la position du mobile dans l'enceinte constitué par une bobine inductrice et au moins une bobine induite entourant ladite enceinte, est caractérisé

— en ce qu'il présente en outre un moyen apte à équilibrer le poids apparent du mobile se déplaçant dans l'enceinte lorsque ledit mobile est noyé dans un écoulement laminaire du fluide à mesurer,
— en ce que l'organe de détection électromagnétique détecte la position d'équilibre du mobile dans l'enceinte,
— et en ce que dans l'organe de détection électromagnétique

· la bobine induite est située au niveau d'une des deux extrémités du mobile au repos, et
· la bobine inductrice est située au voisinage du milieu du mobile au repos.

Avantageusement, on dispose une bobine induite à chaque extrémité du mobile au repos et on branche ces deux bobines en montage différentiel.

En d'autres termes, ce viscosimètre est basé sur le principe de l'équilibre du poids apparent d'un mobile noyé dans un écoulement de fluide liquide à vitesse constante et connue. La position d'équilibre du mobile est fonction uniquement de la viscosité du fluide. Il suffit alors de détecter cette position d'équilibre pour connaître la viscosité.

En pratique:

— le moyen apte à équilibrer le poids apparent du mobile est constitué par un ressort fixé au sommet de l'enceinte et dudit mobile,
— l'alimentation du fluide liquide dans l'enceinte est effectuée à l'aide d'une pompe volumétrique, de manière à obtenir un débit indépendant de la viscosité du fluide à mesurer et des conditions d'installation,
— selon la nature du fluide à mesurer, la nature chimique de l'enceinte en matériau a magnétique peut varier; par exemple, on obtient de bons résultats avec des enceintes en acier inoxydable lorsque l'on mesure des viscosités de fuel-oil à des températures voisines de 120—130°C et à des pressions voisines de 20 à 25 bars, alors qu'en revanche, pour des pressions inférieures, le verre peut suffire,
— le mobile en matériau magnétique est réalisé en tout matériau ferro-magnétique, par exemple en fer doux;
— l'amenée du fluide liquide est réalisée en bas de l'enceinte,
— la raideur du ressort d'équilibre du poids apparent du mobile varie en fonction inverse du déplacement que l'on désire obtenir pour le mobile.

Comme déjà dit, il importe que dans l'enceinte, le fluide qui s'écoule soit en régime laminaire. Un technicien pourra aisément déterminer les dimensions respectives des différents organes, de manière à ce que, pour un fluide liquide donné, le nombre de Reynolds soit inférieur à 2000.

Connaissant les dimensions de l'enceinte que l'on peut dénommer également capteur, la seule lecture de la tension induite entre les bobines permet de déterminer directement la viscosité du fluide liquide. Il s'agit donc là d'une mesure primaire de la viscosité, puisqu'elle ne nécessite aucun étalonnage. En outre, le fait d'obtenir comme signal de détection une tension de niveau élevé permet d'envisager une régulation bon marché.

La manière dont l'invention peut être réalisée et les avantages qui en découlent, ressortiront mieux des exemples de réalisation qui suivent donnés à titre indicatif et non limitatif à l'appui des figures annexées.

La figure 1 représente schématiquement en coupe un viscosimètre selon l'invention.

La figure 2 représente un schéma de montage électrique d'un viscosistat comportant un tel viscosimètre.

La figure 3 montre une autre forme de réalisation de ce viscosimètre.

La figure 4 montre un exemple de réalisation de viscosistat.

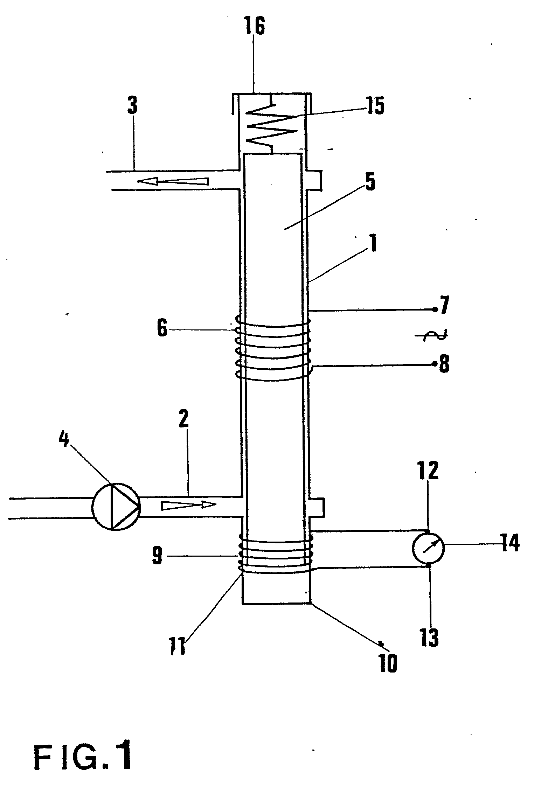

Sur la figure 1, le viscosimètre illustré se compose:

— d'une enceinte cylindrique 1 en un matériau amagnétique par exemple en verre ou en acier inox, équipée d'un organe d'amenée de fluide 2 et d'un organe de sortie 3, par exemple en un raccord classique; sur le raccord d'amenée est montée une pompe volumétrique 4, type haute pression fuel,
— d'un mobile également cylindrique 5, coaxial à l'enceinte 1, dans laquelle il peut se déplacer, réalisé en matériau magnétique, par exemple en fer doux plein,
— d'une bobine inductrice 6 entourant l'enceinte 1, disposée au voisinage du centre de l'enceinte 1 et du mobile 5 au repos, reliée par ses extrémités 7 et 8 à une source de courant alternatif,
— d'une bobine induite 9, sensiblement identique à la bobine inductrice 6, c'est-à-dire ayant sensiblement les mêmes caractéristiques, le même nombre de spires et les mêmes fils; cette bobine induite 9 entoure également l'enceinte 1 et est située sensiblement au niveau de l'extrémité basse 10 d'entrée de l'enceinte 1 et plus précisément au niveau de l'extrémité 11 du mobile 5; les extrémités 12 et 13 de cette bobine induite 9 sont connectées à un voltmètre de mesure 14,

— d'un ressort spiralé 15, par exemple en corde à piano, connecté au couvercle 16 vissable sur l'enceinte 1 et à l'extrémité supérieure du mobile 5; la raideur de ce ressort 15 est déterminée pour équilibrer le poids apparent du mobile 5 se déplaçant dans l'enceinte 1 lorsqu'il est noyé dans un écoulement laminaire du fluide amené en 2.

En d'autres termes, le déplacement $x$ du mobile 5 est détecté électromagnétiquement par l'induction d'un bobine dont le noyau est justement le mobile 5. Cette bobine telle que positionnée enregistre les variations d'induction lorsque le mobile 5 coulisse dans l'enceinte 1 sous l'effet de l'écoulement laminaire du fluide issu en 2.

Un technicien peut aisément déterminer la viscosité du fluide liquide à mesurer en tenant compte du fait que la position d'équilibre exacte du mobile 5 pour un ressort 15 de raideur connue, est donnée par la formule:

$$R = Pa - K.\eta = k.x$$

dans laquelle:

Pa désigne le poids apparent du mobile 5
k la raideur du ressort
x le déplacement du mobile 5
$\eta$ la viscosité
K une constante dépendant des grandeurs géométriques et de l'écoulement.

Comme on travaille avec un même type de fluide liquide, c'est-à-dire un fluide pour lequel la masse volumique est pratiquement constante, le poids apparent du mobile 5 reste, lui aussi, constant. On peut donc ainsi déterminer la viscosité en fonction du déplacement.

On a déterminé que la distance $d$ entre la bobine inductrice 6 et la bobine induite 9, le nombre de spires des bobines 6—9 et l'entrefer entre les bobines 6—9 et le noyau 5 constituent des facteurs importants pour améliorer la qualité du signal reçu.

Dans une forme de réalisation expérimentée:

— l'enceinte 1 est formée en un tube de verre de diamètre 20—22 millimètres et de longueur 250 millimètres,
— le mobile 5 est en fer doux plein de diamètre 18 millimètres,
— la raideur du ressort 15 est voisine de 25 Newtons/mètre,
— la distance entre l'amenée 2 et la sortie 3 est de 200 millimètres,

— la pompe volumétrique 4 débite 120 litres à l'heure de fuel lourd,
— la bobine inductrice 6 est alimentée sous 24 volts alternatif.

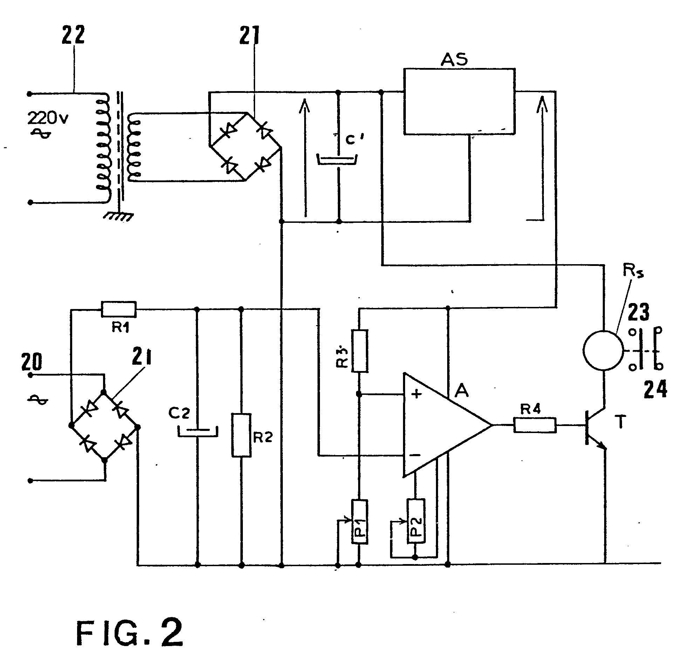

Lorsque l'on désire utiliser ce viscosimètre en viscosistat, on lui associe de manière connue des moyens de régulation. Un montage particulier de ces moyens de régulation est représenté à la figure 2 sur laquelle:

— 20 désigne le signal émis par la bobine induite 9
— 21 un pont de Graetz
— $R_1$, $R_2$, $R_3$ des résistances électriques
— $P_1$, $P_2$ des potentiomètres
— $C_1$, $C_2$ des condensateurs
— A un amplificateur-comparateur
— AS une alimentation stabilisée à base de transistor et/ou autre
— RS un relai de sortie
— T un transistor.

Lorsque l'on fait fonctionner la pompe 4, le fluide pénètre entre l'enceinte 1 et le mobile 5 en créant un écoulement laminaire qui déplace le mobile 5 vers le haut, ce qui comprime le ressort 15. Le mobile 5 formant noyau atteint alors une position d'équilibre fonction uniquement de la viscosité du fluide si le débit est connue. On envoie alors un courant électrique dans la bobine 6. La bobine induite 9 est alors parcourue par un courant qui dépend de la position du mobile 5 par rapport à elle.

Le signal 20 émis par la bobine 9 est traité dans le régulateur montré à la figure 2, équipé de sa propre alimentation 22 en courant alternatif par exemple de 220 volts.

Ce signal 20 émanant du viscosimètre est comparé à une valeur de consigne dans le régulateur. Selon le résultat de cette comparaison, le régulateur actionnera ou non le relai de sortie Rs dont les contacts 23—24 peuvent être utilisés pour la commande d'une résistance destinée à réchauffer le fluide pour en diminuer la viscosité.

Si on le désire, on peut modifier l'action de régulation, notamment en actionnant une électro-vanne introduisant par exemple soit du solvant dans le fluide quand on désire diminuer la viscosité, soit de la vapeur ou de l'eau surchauffée dans un échangeur destiné à réchauffer le fluide.

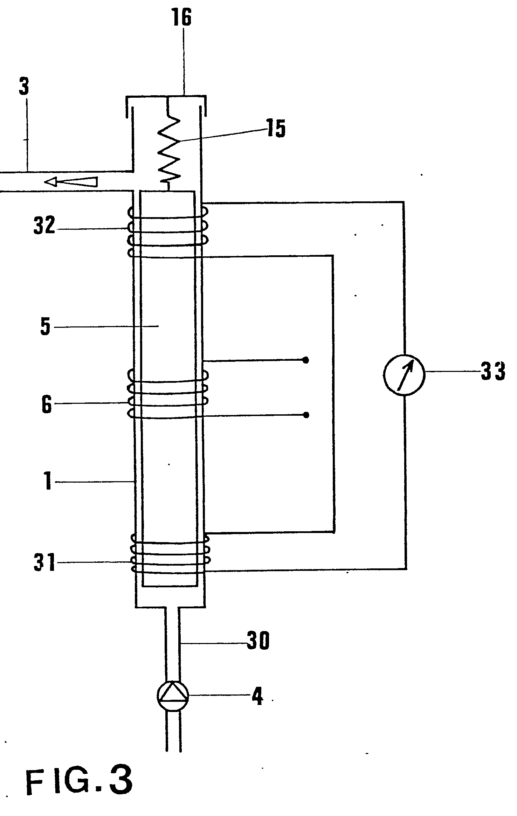

Dans une autre forme d'exécution préférée, montrée à la figure 3, l'amenée du fluide 30 est dirigée en bas dans l'axe de l'enceinte 1 et surtout, au lieu d'avoir une seule bobine induite, on dispose deux bobines induites 31—32, une à chaque extrémité du mobile 5. Ces deux bobines 31—32 sont disposées sensiblement de manière symétrique par rapport à la bobine inductrice 6. Comme précédemment, ces deux bobines 31—32 sont indentiques entre elles et à la bobine inductrice 6. Ces bobines 31—32 sont reliées entre elles par un montage en opposition ou différentiel, de sorte qu'on ne recueille sur le voltmètre 33 que la différence entre les deux signaux.

En d'autre termes, on met en oeuvre le principe bien connu des capteurs de proximité, dénommés également "capteurs à transformateur différentiel" ou en anglais "linear variable differential transformer" (LVDT) largement décrit par H. SCHAEVITZ.

Le fonctionnement de ce dispositif en viscosimètre ou en viscosistat est le même que dans la réalisation précédente.

Dans une variante, la pompe volumétrique 4 peut être située non pas en amont, mais en aval sur le raccord de sortie 3.

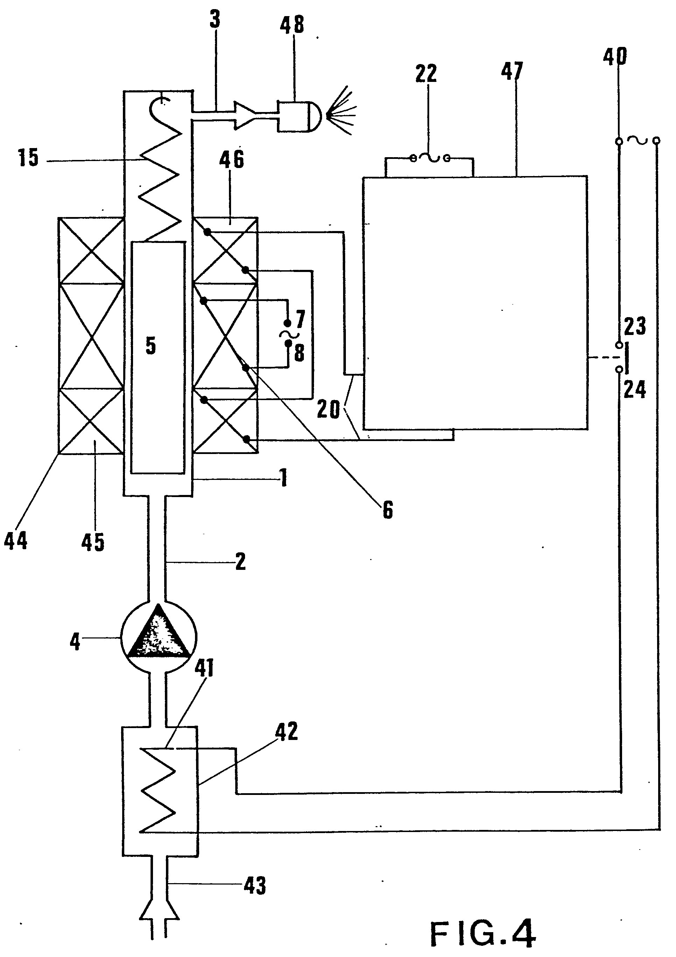

La figure 4 représente un viscosistat réalisé conformément à l'invention. Sur cette figure, 40 désigne la source électrique d'alimentation, par exemple en 220 volts alternatif, destiné à chauffer une résistance 41 placée dans une enceinte 42 où passe le fluide alimenté par la tubulure 43, elle-même reliée à une source non représentée. Le fluide réchauffé traverse ensuite une pompe volumétrique, puis de là, pénètre dans l'enceinte où se déplace le mobile 5 connecté à son extrémité à un ressort 15. Le fluide sort ensuite par l'organe de sortie 3 pour arriver au gicleur de pulvérisation 48. L'enceinte 1 est entourée d'un capteur de déplacement 44 formé d'une bobine inductrice 6 elle-même reliée à une source 7—8 alternative et de deux bobines induites respectivement 45 et 46 associées aux moyens de régulation 47, détaillés à la figure 2.

Les appareils conformes à l'invention présentent de nombreux avantages par rapport aux dispositifs viscosimètres ou viscosistats commercialisés à ce jour. On peut citer:

— tout d'abord, leur construction assez simple et peu onéreuse,
— le fait d'opérer réellement en continu, ce qui facilite les manipulations et diminué considérablement la durée de chaque mesure,
— le signal de sortie assez important, surtout dans l'exemple de réalisation de la figure 3, donc plus facile à détecter, ce que simplifie considérablement le régulateur du viscosistat,
— la grande sensibilité puisqu'il permet de détecter des variations de viscosité de l'ordre de 1/100ème de centistokes,
— le peu d'usure, car peu de pièces mécaniques sont en mouvement donc stabilité dans le temps,
— la bonne fiabilités.

De la sorte, ce viscosimètre ou ces viscosistats peuvent être utilisés avec succès dans de nombreuses applications, notamment où l'on recherche à détecter des variations de viscosité ou à maintenir une viscosité aussi constante que possible. A titre d'exemple, on peut citer la régulation de viscosité de fuels lourds, notamment dans les appareils de chauffage ou de production d'énergie.

**Revendications**

1. Viscosimètre du type comportant

— une enceinte étanche (1) en un matériau amagnétique présentant un organe d'amenée (2) et un organe de sortie (3) pour un fluide liquide,
— un mobile (5), en un matériau magnétique, apte à se déplacer dans ladite enceinte (1),
— un organe de détection électromagnétique de la position du mobile dans l'enceinte constitué par une bobine inductrice (6) et au moins une bobine induite (9) entourant ladite enceinte,
caractérisé
— en ce qu'il présente en outre un moyen apte à équilibrer le poids apparent du mobile (5) se déplaçant dans l'enceinte lorsque ledit mobile est noyé dans un écoulement laminaire du fluide à mesurer,
— en ce que l'organe de détection électromagnétique détecte la position d'équilibre du mobile (5) dans l'enceinte (1),
— et en ce que dans l'organe de détection électromagnétique
. la bobine induite (9) est située au niveau d'une des deux extrémités (11) du mobile (5) au repos, et
. la bobine inductrice (6) est située au voisinage du milieu du mobile (5) au repos.

2. Viscosimètre selon revendication 1 présentant deux bobines induites (31)—(32), caractérisé en ce que lesdites bobines induites (31)—(32) sont placées à chaque extrémité du mobile (5) au repos et sont symétriques par rapport à la bobine inductrice (6).

3. Viscosimètre selon l'une des revendications 1 et 2, caractérisé en ce que le moyen apte à équilibrer le poids apparent du mobile (5) se déplaçant dans l'enceinte (1), lorsqu'il est noyé dans un écoulement laminaire de fluide à mesurer, est un ressort (15) fixé respectivement à l'extrémité supérieure (16) de l'enceinte (1) et du mobile (5), dont la raideur équilibre le poids apparent dudit mobile (5).

4. Viscosimètre selon l'une des revendications 1 à 3, caractérisé en ce que la surface intérieure de l'enceinte (1) et la surface extérieure du mobile (5) ont sensiblement la même forme.

5. Viscosimètre selon l'une des revendications 1 à 4, caractérisé en ce qu'il comporte en outre une pompe volumétrique (4) disposée sur le circuit d'amenée (2) ou de sortie (3) du fluide liquide.

6. Viscosimètre selon l'une des revendications 1 à 5, caractérisé en ce que la bobine inductrice (6) et les bobines induite (9) ont les mêmes caractéristiques.

7. Viscosimètre selon l'une des revendications 1 à 6, caractérisé en ce que l'organe d'amenée (2) du fluide est disposé en bas et dans l'axe de l'enceinte (1).

8. Viscosistat comportant de manière connue un viscosimètre, des moyens de détection de la variation de la viscosité donnée par le viscosimètre et des moyens de régulation de l'écoulement d'une fluide liquide connectés aux moyens de détection, caractérisé en ce que le viscosimètre est réalisé selon l'une des revendications 1 à 7.

## Claims

1. Viscosimeter comprising

— a sealed casing (1) of a magnetic material having an inlet (2) and outlet (3) for receiving and dispersing a fluid material,
— a mobile (5) of magnetic material, adapted to be displaced in said casing (1),
— an electromagnetic detection device for detecting the position of the said mobile (5) within the casing (1) comprising one induction coil (6) and at least one inducing coil (9) surrounding said casing,
characterized by the facts
— that it comprises also means for balancing the apparent weight of said mobile which is displaced in the casing, when the mobile sinks in a laminar flow of the fluid whose viscosity is to be measured,
— that the electromagnetic detection device detects the balanced position of the mobile (5) within the casing (1),
— and that into the electromagnetic detection device

· the inducing coil (9) is located at either of the ends (11) of said mobile (1) in its rest position and,

· the induction coil (6) is located in the vicinity of the center of the said resting mobile (5).

2. Viscosimeter according to claim 1 comprising two inducing coils (31—32), characterized by the fact that the two inducing coils (31—32) are located at each end of the resting mobile (5) and are symmetric with respect to the induction coil (6).

3. Viscosimeter according to any of claims 1 and 2, characterized by the fact that the means for balancing the apparent weight of the mobile (5) displaced in said casing (1), when it sinks into a laminar flow of the fluid whose viscosity is to be measured, is a spring (15) fixed respectively to the upper end (16) of the casing (1) and of the mobile (5), whose the rigidity balances the apparent weight of said mobile (5).

4. Viscosimeter according to any of claims 1 to 3, characterized by the fact that the internal shape of the casing (1) and the external shape of the mobile (5) have the same geometric configuration.

5. Viscosimeter according to any of claims 1 to 4, characterized that it includes a volumetric pump (4) located on the inlet means (2) or on the outlet means (3) of the liquid fluid.

6. Viscosimeter according to any of claims 1 to 5, characterized by the fact that the induction coil (6) and the inducing coils (9) are substantially identical.

7. Viscosimeter according to any of claims 1 to 6, characterized by the fact that the inlet means (2) for the fluid is located at the lower part of the casing (1) and on the axis of the said casing (1).

8. Viscosistat comprising a known viscosimeter, means for detecting variations of viscosity given by the viscosimeter and means for regularizing the flow of a liquid connected to the detection means, characterized by the fact that the viscosimeter is made according to any of claims 1 to 7.

## Patentansprüche

1. Viskosimeter des Typs, der einen dichten Behälter (1) aus unmagnetischem Material, der mit einer Zuleitung (2) und einer Ableitung (3) für eine Flüssigkeit versehen ist, einen Bewegungskörper (5) aus magnetischem Material, der sich im Behälter (1) verlagern kann, un einen elektromagnetischen Detektor zur Bestimmung der Lage des Bewegungskörpers im Behälter, der gebildet ist aus einer induzierenden Spule (6) und mindestens einer induzierten Spule (9), welche um den Behälter herum angeordnet sind, aufweist, dadurch gekennzeichnet, daß außerdem ein Organ zum Ausgleichen des scheinbaren Gewichts des sich im Behälter verlagernden Bewegungskörpers (5) vorgesehen ist, wenn sich der Bewegungskörper in einer laminaren Strömung der zu messenden Flüssigkeit befindet, daß der elektromagnetische Detektor die Gleichgewichtslage des Bewegungskörpers (5) im Behälter (1) feststellt, und daß im elektromagnetischen Detektor die induzierte Spule (9) auf der Höhe eines der beiden Enden (11) des Bewegungskörpers (5) in dessen Ruhelage angeordnet ist sowie die induzierende Spule (6) in der Umgebung der Mitte des Bewegungskörpers (5) in dessen Ruhelage angeordnet ist.

2. Viskosimeter nach Anspruch 1 mit zwei induzierten Spulen (31, 32), dadurch gekennzeichnet, daß die beiden induzierten Spulen (31, 32) am jeweiligen Ende des Bewegungskörpers (5) in dessen Ruhelage und symmetrisch mit Bezug auf die induzierende Spule (6) angeordnet sind.

3. Viskosimeter nach einem der Ansprüche 1 und 2, dadurch gekennzeichnet, daß das Organ zum Ausgleichen des scheinbaren Gewichts des sich im Behälter (1) verlagernden Bewegungskörpers (5), wenn sich dieser in einer laminaren Strömung der zu messenden Flüssigkeit befindet, eine Feder (15) ist, die jeweils am oberen Ende (6) des Behälters (1) und an dem des Bewegungskörpers (5) befestigt ist und deren Steifigkeit das scheinbare Gewicht des Bewegungskörpers (5) ausgleicht.

4. Viskosimeter nach einem der Ansprüche 1 bis 3, dadurch gekennzeichnet, daß die Innenfläche des Behälters (1) und die Außenfläche des Bewegungskörpers (5) im wesentlichen die gleiche Form aufweisen.

5. Viskosimeter nach einem der Ansprüche 1 bis 4, dadurch gekennzeichnet, daß außerdem eine volumetrische Pumpe (4) vorgesehen ist, die im Bereich der Zuleitung (2) oder der Ableitung (3) der Flüssigkeit angeordnet ist.

6. Viskosimeter nach einem der Ansprüche 1 bis 5, dadurch gekennzeichnet, daß die induzierende Spule (6) und die induzierten Spulen (9) die gleiche Charakteristik aufweisen.

7. Viskosimeter nach einem der Ansprüche 1 bis 6, dadurch gekennzeichnet, daß die Zuleitung (2) für die Flüssigkeit unten und in der Achse des Behälters (1) angeordnet ist.

8. Viskosistat, der in bekannter Weise ein Viskosimeter, Mittel zur Erfassung der Veränderung der durch das Viskosimeter bestimmten Viskosität und Mittel zur Steuerung der Strömung einer Flüssigkeit die mit den Mitteln zur Erfassung verbunden sind, aufweist, dadurch gekennzeichnet, daß ein Viskosimeter nach einem der Ansprüche 1 bis 7 vorgesehen ist.

FIG.1

FIG. 2

FIG.3

FIG.4